# EUROPEAN PATENT SPECIFICATION

(11) **EP 3 054 458 B1**
(45) Date of publication and mention of the grant of the patent: **14.08.2019**
(21) Application number: 14850358.4
(22) Date of filing: 29.09.2014
(51) Int. Cl.: C09J 4/00, C09J 7/29, C09J 133/08, B32B 27/26, G06F 3/041

(54) **CONDUCTIVE LAMINATE**
LEITENDES LAMINAT
STRATIFIÉ CONDUCTEUR

(30) Priority: 01.10.2013 KR 20130117079
(43) Date of publication of application: 10.08.2016
(73) Proprietor: LG Chem, Ltd., Seoul 150-721 (KR)
(72) Inventor: KWON, Yoon Kyung, Daejeon 305-738 (KR); KIM, Hyun Cheol, Daejeon 305-738 (KR); PARK, Hyon Gyu, Daejeon 305-738 (KR)
(74) Representative: Goddar, Heinz J.
(86) International application number: PCT/KR2014/009110
(87) International publication number: WO 2015/050344

(56) References cited:
- WO-A1-2013/094542
- JP-A- 2012 079 257
- JP-A- 2013 129 201
- KR-A- 20070 084 424
- KR-A- 20130 062 880
- US-A1- 2008 213 583

## Description

### BACKGROUND

### 1. Field of the Invention

The present invention relates to a conductive laminate, a method of manufacturing the same, and an electronic device including the same.

### 2. Discussion of Related Art

A touch panel or touch screen may be diversely applied to a terminal for processing various information such as a mobile communication terminal or an ATM or a display device such as a TV or a monitor. In addition, with the increased application to a compact portable electronic device, the demand for a more compact and lighter touch panel or screen is increasing.

To manufacture the touch panel or screen, for example, a conductive laminate such as that disclosed in Korean Patent Laid-Open Application No. 2002-0036837 or 2001-0042939 is used.

Such a conductive laminate may include a pressure-sensitive adhesive layer. However, the pressure-sensitive adhesive layer of the conductive laminate may generate bubbles due to heat under a thermal treatment condition for ITO crystallization. Particularly, in a structure in which ITO is formed on both sides, during the thermal treatment for ITO crystallization, bubbles may be generated from the pressure-sensitive adhesive layer, and since the ITO serves as a gas barrier, it may prevent the bubbles from being removed.

US 2008/213583 A1 discloses an electrically-conductive laminated film including a first transparent substrate, an electrically-conductive film including a second transparent substrate and a transparent electrically-conductive thin layer provided on one side of the second transparent substrate and a pressure-sensitive adhesive layer with which the first substrate and the electrically-conductive film are bonded to each other. As second surface of the first transparent substrate is bonded to a second surface of the second transparent substrate with the pressure-sensitive adhesive layer. In the electrically-conductive film, the transparent electrically-conductive thin layer is provided on a first surface of the second transparent substrate.

### SUMMARY OF THE INVENTION

The present invention provides a conductive laminate according to claim 1, a method of manufacturing a conductive laminate according to claim 10, a touch panel according to claim 13 and a display device according to claim 14. Further embodiments are disclosed in the dependent claims.

The present invention is directed to providing a conductive laminate having reliability by preventing bubbles from being generated from a pressure-sensitive adhesive layer during thermal treatment for crystallizing a conductive layer.

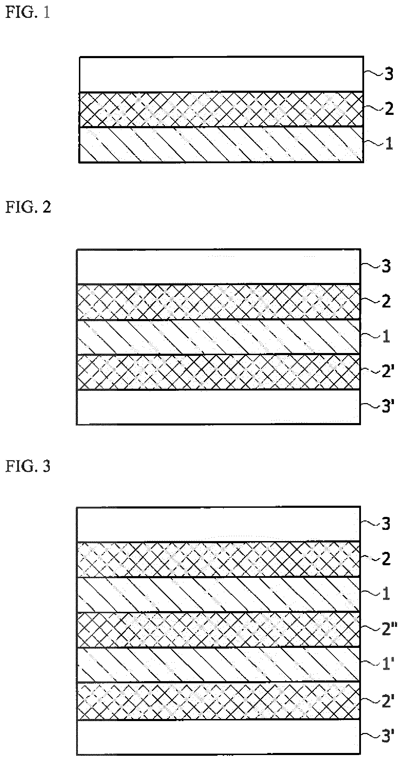

In one aspect, a conductive laminate is provided. FIG. 1 is a cross-sectional view of an exemplary conductive laminate. The conductive laminate according to the present invention may sequentially include a conductive layer 3, a base layer 2 and a pressure-sensitive adhesive layer 1. In an exemplary embodiment of the present invention, the conductive laminate may include a base layer 2, a pressure-sensitive adhesive layer 1, which is formed under the base layer 2 and includes a crosslinkable polymer including a monomer having a boiling point of 140 °C or less or 200 °C or more as a polymerization unit, and a conductive layer 3 formed on the base layer 2. In one example, as shown in FIG. 2, the conductive laminate according to the present invention may sequentially include a conductive layer 3, a base layer 2, a pressure-sensitive adhesive layer 1, a second base layer 2' and a second conductive layer 3'. That is, the conductive laminate may include a first base layer 2, a pressure-sensitive adhesive layer 1, which is formed under the first base layer 2 and includes a crosslinkable polymer including a monomer having a boiling point of 140 °C or less or 200 °C or more as a polymerization unit; a first conductive layer 3 formed on the first base layer 2, a second base layer 2' formed under the pressure-sensitive adhesive layer 1, and a second conductive layer 3' formed under the second base layer 2'. As described above, the conductive laminate according to the present invention may be a double-sided conductive laminate. The both-side conductive laminate may include at least two conductive layers on both surfaces, and at least one pressure-sensitive adhesive layer and at least one base layer between the at least two conductive layers. FIG. 3 is a cross-sectional view of a double-sided conductive laminate according to another exemplary embodiment, which sequentially includes a first conductive layer 3, a first base layer 2, a first pressure-sensitive adhesive layer 1, a third base layer 2", a second pressure-sensitive adhesive layer 1', a second base layer 2' and a second conductive layer 3'.

To manufacture the double-sided conductive laminate, a conductive layer is formed on both surfaces of a single base layer using double-sided deposition equipment. However, when single-sided deposition equipment is used, a deposition process should be performed twice, and as the base layer becomes thicker, a production rate is decreased during the deposition of the conductive layer. Accordingly, the double-sided conductive laminate is generally formed by laminating several conductive layers formed on a thin base layer using a pressure-sensitive adhesive. To manufacture a lamination-type double-sided transparent conductive film, unlike a conventional single-sided conductive laminate, a double-sided conductive layer may serve as a gas barrier to prevent reduction of a gas generated in thermal treatment and aging, resulting in generation of bubbles. The conductive laminate having the above-described structure according to the present invention may effectively prevent bubbles which may be generated from the pressure-sensitive adhesive layer, thereby ensuring reliability.

The term "upper" or "lower" used herein indicates a relative position of each layer constituting a conductive laminate, and when an actual conductive laminate is manufactured, it is not necessary to dispose a layer at an upper or lower portion.

The conductive layers, that is, the first conductive layer and/or the second conductive layer, may be a crystalline or amorphous type. The conductive laminate according to the present invention may include an amorphous conductive layer before crystallization by thermal treatment. In another example, the conductive laminate may include a crystalline conductive layer after crystallization. In the present invention, the amorphous conductive layer may be distinguished from the crystalline conductive layer according to a general standard to distinguish crystallinity of a conductive layer used in the field of a conductive laminated film. For example, in the present invention, the term "amorphous conductive layer" means a conductive layer having a ratio of an area generally charging polygonal or oval-shaped crystals on a surface which is observed by field emission transmission electron microscopy (FE-TEM) of 50% or less or 0 to 30%. Accordingly, the term "crystalline conductive layer" used herein may mean that an area ratio of the crystals exceeds 50%. The amorphous conductive layer may be applied to a product through crystallization treatment after a process such as patterning.

In one example, materials for the first pressure-sensitive adhesive layer and the second pressure-sensitive adhesive layer may be the same as or different from each other, and description for a pressure-sensitive adhesive layer to be described below may include the first pressure-sensitive adhesive layer and the second pressure-sensitive adhesive layer.

In an exemplary embodiment of the present invention, a pressure-sensitive adhesive layer constituting a conductive laminate may include, as described above, a crosslinkable polymer including a monomer having a boiling point of 140 °C or less, or 200 °C or more as a polymerization unit. In addition, more specifically, the boiling point of the monomer may be 140 °C or less or 205 °C or more, 135 °C or less or 210 °C or more, or 130 °C or less or 210 °C or more. That is, the crosslinkable polymer does not include a monomer having a boiling point of more than 140 °C and less than 200 °C, a monomer having a boiling point of more than 140 °C and less than 205 °C, a monomer having a boiling point of more than 135 °C and less than 210 °C, or a monomer having a boiling point of more than 130 °C and less than 210 °C. As the boiling point of the monomer as a polymerization unit of the polymer constituting the pressure-sensitive adhesive layer is controlled, bubbles which may be generated from the pressure-sensitive adhesive layer may be prevented during thermal treatment for crystallizing the conductive layer. That is, when the monomer has a boiling point of 140 °C or less, a monomer component may be volatilized in a process for forming the pressure-sensitive adhesive layer (coating process), and thus it is possible to remove the remaining monomer which may generate bubbles. In addition, although the monomer having a boiling point of 200 °C or more remains, it is not volatilized due to the boiling point higher than a temperature for a thermal treatment for crystallizing the conductive layer, which will be performed later. Accordingly, the crosslinkable polymer constituting the pressure-sensitive adhesive layer according to the present invention does not include a monomer having a boiling point of more than 140 °C and less than 200 °C. Therefore, the conductive laminate of the present invention may solve a problem of bubbles that may be generated from the pressure-sensitive adhesive layer.

Meanwhile, the boiling point of the monomer may be 60 °C or more. When the boiling point of the monomer is lower than 60 °C, the monomer may be volatilized in the polymerization process. In addition, the monomer may have a boiling point of 300 °C or less. When the boiling point of the monomer is higher than 300 °C, a polymerization degree may be decreased in the polymerization process.

In one example, the polymer may include 10 to 60 parts by weight of a monomer having a boiling point of 140 °C or less, and 40 to 90 parts by weight of a monomer having a boiling point of 200 °C. The unit "parts by weight" used herein refers to a weight ratio. As the weight ratio between monomers is adjusted as described above, physical properties of the pressure-sensitive adhesive layer, for example, adhesive strength, durability and peeling strength, may be effectively controlled.

As long as the above-described range of the boiling point is satisfied, the type of a monomer is not particularly limited, and in one example, the monomer having a boiling point of 140 °C or less or 200 °C or more may be ethyl (meth)acrylate, n-propyl (meth)acrylate, isopropyl (meth)acrylate, pentyl (meth)acrylate, 2-ethylhexyl (meth)acrylate, 2-hydroxyethyl (meth)acrylate, 2-hydroxypropyl acrylate, 2-hydroxybutyl acrylate, 4-hydroxybutyl acrylate, n-octyl (meth)acrylate, isooctyl (meth)acrylate, isononyl (meth)acrylate, lauryl (meth)acrylate, tetra decyl (meth)acrylate, methyl (meth)acrylate, t-butyl (meth)acrylate, isobornyl acrylate, cyclohexyl (meth)acrylate, acrylic acid, maleic acid, styrene, vinyl acetate, isopropyl methacrylate, acrylonitrile dihydrodicyclopentadienyl acrylate, N-vinylformamide, benzyl acrylate, diacetone acrylamide, or a combination thereof.

Here, in consideration of the physical properties of the monomer such as cohesive strength, a glass transition temperature and a pressure-sensitive adhesive property, the monomer may be a (meth)acrylic acid ester monomer, and particularly, an alkyl (meth)acrylate including an alkyl group having 1 to 14 carbon atoms, but the present invention is not limited thereto.

The monomer having a boiling point of 140 °C or less or 200 °C or more includes at least one of a compound including at least one reactive functional group. That is, the compound including a reactive functional group may be included as a polymerization unit of the polymer. In this case, the compound may provide a reactive functional group which can be reacted with a multifunctional crosslinking agent which will be described below to the polymer. Such a compound including a reactive functional group may be a compound containing a hydroxyl group, a compound containing a carboxyl group, or a compound containing nitrogen. In the field of preparing a polymer, various polymerizable monomers for providing such a reactive functional group to the acrylic polymer are known, and the monomers may be used without limitation in the present invention. For example, the compound having a hydroxyl group may be 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 2-hydroxyethyleneglycol (meth)acrylate or 2-hydroxypropyleneglycol (meth)acrylate, the compound having a carboxyl group may be (meth)acrylic acid, 2-(meth)acryloyloxy acetic acid, 3-(meth)acryloyloxy propylic acid, 4-(meth)acryloyloxy butylic acid, acrylic acid dimer, itaconic acid, maleic acid or maleic acid anhydride, and the compound having nitrogen may be (meth)acrylamide, N-vinyl pyrrolidone or N-vinyl caprolactam, but the present invention is not limited thereto. Meanwhile, the compound including a reactive functional group may also have a boiling point of 150 °C or less, or 200 °C or more as described above. In one example, the compound including a reactive functional group may be included at 1 to 20, 2 to 19, 3 to 18, 4 to 17 or 5 to 16 parts by weight with respect to 100 parts by weight of the crosslinkable polymer.

In the present invention, the polymer may be prepared by a conventional polymerization method in the art, for example, solution polymerization, photo polymerization, bulk polymerization, suspension polymerization or emulsion polymerization, and preferably solution polymerization. Here, the polymer may be crosslinked in the pressure-sensitive adhesive layer.

In the present invention, the crosslinkable polymer in the pressure-sensitive adhesive layer is crosslinked by at least one multifunctional crosslinking agent selected from the group consisting of an isocyanate crosslinking agent, an epoxy crosslinking agent, an aziridine crosslinking agent and a metal chelate crosslinking agent. Such a crosslinking agent reacts with a polar functional group having an acrylic polymer to improve a cohesive strength of a resin cured product (pressure-sensitive adhesive layer), provide a crosslinked structure, and serve to adjust a pressure-sensitive adhesive characteristic. In one example, one or at least two types of the crosslinking agents may be suitably selected in consideration of a type of the reactive functional group included in the polymer.

As the isocyanate crosslinking agent, tolylene diisocyanate, xylene diisocyanate, diphenylmethane diisocyanate, hexamethylene diisocyanate, isophorone diisocyanate, tetramethylxylene diisocyanate or naphthalene diisocyanate, or an adduct of at least one of the isocyanate compounds and a polyol may be used, and as the polyol, trimethylolpropane may be used. In addition, as the epoxy crosslinking agent, one or at least two of ethyleneglycol diglycidylether, triglycidylether, trimethylolpropane triglycidylether, N,N,N',N'-tetraglycidyl ethylenediamine or glycidyl diglycidylether may be used, and as the aziridine crosslinking agent, N,N'-toluene-2,4-bis(1-aziridinecarboxamide), N,N'-diphenylmethane-4,4'-bis(1-aziridinecarboxamide), triethylene melamine, bisisophthaloyl-1-(2-methylaziridine) or tri-1-aziridinylphosphineoxide may be used, but the present invention is not limited thereto. In addition, as the metal chelate crosslinking agent, a compound in which a polyvalent metal such as aluminum, iron, zinc, tin, titanium, antimony, magnesium and/or vanadium binds to acetyl acetone or ethyl acetoacetate by a coordinate bond, but the present invention is not limited thereto. The multifunctional crosslinking agent may be included at 0.01 to 10, 0.1 to 9 or 0.2 to 8 parts by weight with respect to 100 parts by weight of the polymer.

In one example, the polymer may have a weight average molecular weight of 500,000, 550,000, 600,000, 650,000, 700,000, 800,000, 900,000, 1,000,000, 1,100,000 or 1,200,000 or more. The upper limit of the weight average molecular weight may be, but is not particularly limited to, 2,000,000 or less. In this range, the durability and pressure-sensitive adhesive property of the pressure-sensitive adhesive layer may be effectively controlled.

The pressure-sensitive adhesive layer of the present invention may further include one or at least two of additives such as a silane coupling agent, a tackifier, an epoxy resin, a UV stabilizer, an antioxidant, a coloring agent, a reinforcing agent, a filler, a foaming agent, a surfactant and a plasticizer.

In one example, the base layer, that is, first to third base layers, may include at least one selected from the group consisting of a polyethylene terephthalate (PET) film, a polytetrafluoroethylene film, a polyethylene film, a polypropylene film, a polybutene film, a polybutadiene film, a vinyl chloride copolymer film, a polyurethane film, an ethylene-vinyl acetate film, an ethylene-propylene copolymer film, an ethylene-ethyl acrylate copolymer film, an ethylene-methyl acrylate copolymer film and a polyimide film. Materials for the first to third base layers may be the same as or different from each other.

In the present invention, a thickness of the base layer is not particularly limited, and may be suitably determined to serve as a conductive laminate. For example, the base layer may have a thickness of approximately 1 to 500, 3 to 300, 5 to 250 or 10 to 200 µm.

Though not particularly limited, a suitable adhesive treatment such as corona discharging, UV radiation, plasma treatment or sputter etching may be performed on the base layer.

A conductive layer may be formed on one surface of the base layer of the conductive laminate according to the present invention.

A method of forming the conductive layer is not particularly limited, and the conductive layer may be formed by a conventional method of forming a thin film, for example, vacuum deposition, sputtering, ion plating, spray pyrolysis, chemical plating, electroplating or a combination of at least two thereof, and generally vacuum deposition or sputtering.

As a material for forming the conductive layer, a metal such as gold, silver, platinum, palladium, copper, aluminum, nickel, chromium, titanium, iron, cobalt, tin or an alloy of at least two thereof, a metal oxide composed of indium oxide, tin oxide, titanium oxide, cadmium oxide or a combination of at least two thereof, or copper iodide may be used, and as described above, the conductive layer may be a crystalline or amorphous layer. In the present invention, among the above-described materials for forming a conductive layer, indium tin oxide (ITO) may be used, but the present invention is not limited thereto. Materials for forming the first conductive layer and the second conductive layer may be the same as or different from each other.

In addition, a thickness of the conductive layer may be adjusted to approximately 300 nm, or approximately 10 to 200 or 10 to 100 nm in consideration of possibility to continuously form a coating film, conductivity and transparency.

The conductive laminate according to the present invention may further include a known functional layer such as an under-coating layer or a hard coating layer, and may be suitably disposed by one of ordinary skill in the art when needed.

An under-coating layer may be further present between the base layer and the conductive layer in the conductive laminate. For example, the under-coating layer may enhance a cohesive property between the conductive layer and the base layer, and may be preferable to enhance scratch resistance, curve resistance and a welding characteristic. The under-coating layer may include an inorganic material, an organic material or an organic/inorganic combination material. The inorganic material may be, for example, SiO₂, MgF₂ or Al₂O₃, the organic material may be an acrylic polymer, an urethane polymer, a melamine polymer, an alkyde polymer or a siloxane polymer, and the organic/inorganic combination material may be a composite of at least one of the inorganic materials and at least one of the organic materials. In one example, the under-coating layer may be formed using a heat-curable resin including a mixture of a melamine resin, an alkyde polymer and an organic silane condensate as a sol-gel reaction product of a mixture including an organic silane or an organic material. The under-coating layer may be formed by, for example, vacuum deposition, sputtering, ion plating or coating. In addition, the under-coating layer may be generally formed to a thickness of 100 nm or less, or 15 to 100 or 20 to 60 nm.

The conductive laminate may further include a hard coating layer present between the pressure-sensitive adhesive layer and the base layer. The hard-coating layer may be formed of a conventional material, and formed by, for example, a hard coating method including coating a soft resin such as an acryl urethane-based resin or a siloxane-based resin and performing curing. In the hard coating, a silicon resin is mixed with the soft resin such as the acryl urethane-based resin or the siloxane-based rein to roughen a surface, and when applied to a touch panel, a non-glare surface capable of preventing reflection by a mirror action may be simultaneously formed. Such a hard coating layer may be formed to a thickness of approximately 0.1 to 30 µm in consideration of a hardness, a crack resistance and a curling preventing characteristic.

In another aspect, a method of manufacturing a conductive laminate is provided. In one example, the manufacturing method may include thermal treating the above-described conductive laminate. Through the thermal treatment, an amorphous conductive layer may be crystallized. Accordingly, the manufacturing method is to manufacture a conductive laminate including an amorphous conductive layer.

Conditions for the thermal treatment are not particularly limited as long as the conductive layer may be crystallized. In one example, the thermal treatment may be performed at a temperature of 100 to 200, 120 to 200, 145 to 200, or 150 to 190 °C. In addition, the thermal treatment may be performed for 30 minutes to 12 hours, 50 minutes to 6 hours, or 1 hour to 6 hours. Through the thermal treatment, a conductive film may be crystallized, and generation of a carrier in the film may be stimulated. According to the thermal treatment under the above conditions, transition of crystal particles in a crystal film and factors of scattering a defect such as a carrier are reduced, and the carrier may be easily generated. The temperature for thermal treatment may be a temperature of an object to be treated.

The thermal treatment may be performed in an oxygen-containing atmosphere. For the thermal treatment atmosphere, a small amount of oxygen may be used, and the thermal treatment may be performed in an oxygen atmosphere remaining after conventional substitution of a nitrogen or argon gas. The crystal film may be grown by the thermal treatment, and a resistivity of the conductive film may be suitably maintained.

As described above, a method of forming the conductive layer may be, but is not particularly limited to, a conventional method of forming a thin film, for example, vacuum deposition, sputtering, ion plating, spray pyrolysis, chemical plating, electroplating or a combination of at least two thereof, and preferably, vacuum deposition or sputtering. In addition, a method of forming a pressure-sensitive adhesive layer may include, for example, coating a pressure-sensitive adhesive composition or a coating solution prepared using the same on a suitable base by means of a conventional means such as a bar coater and performing curing.

In still another aspect, an electronic device is provided. An exemplary electronic device may be a touch panel. The touch panel may include the conductive laminate, for example, an electrode plate for a touch panel.

The touch panel may be formed in a conventional structure including a capacity type or a resistant film type as long as including the conductive laminate. The conductive laminate may be used to form various devices such as a touch panel and a liquid crystal display.

In yet another aspect, a display device including the touch panel is provided. A structure of the display device may also be the same as a conventional method.

### EFFECTS

According to the present invention, a conductive laminate can prevent bubbles from being generated from a pressure-sensitive adhesive layer during thermal treatment for crystallizing a conductive layer.

### BRIEF DESCRIPTION OF THE DRAWINGS

FIGS. 1 to 3 are cross-sectional views of a conductive laminate according to an exemplary embodiment of the present invention.

### [Description of Reference Numerals]

1, 1': pressure-sensitive adhesive layer
2. 2', 2": base layer
3, 3': conductive layer

### DETAILED DESCRIPTION OF EXEMPLARY EMBODIMENTS

Hereinafter, exemplary embodiments of the present invention will be described in detail with reference to examples according to the present invention and comparative examples not according to the present invention. However, the scope of the present invention is not limited to the embodiments to be disclosed below.

### Example 1

### Preparation of pressure-sensitive adhesive composition

2-ethylhexyl acrylate (2-EHA), methyl acrylate (MA) and 2-hydroxyethylacrylate (2-HEA) were put into a 1L reactor in which nitrogen gas was refluxed and equipped with a cooler to easily adjust a temperature at a weight ratio of 50:40:10 (2-EHA:MA:2-HEA). Subsequently, ethyl acetate (EAc) was added as a solvent, a nitrogen gas was purged for 60 minutes to remove oxygen, and 0.04 parts by weight of a reaction initiator such as azobisisobutyronitrile (AIBN) was added at a temperature of 60 °C to initiate a reaction. Afterward, a reaction product obtained after an approximately 5 hour-reaction was diluted in ethyl acetate (EAc), thereby preparing a polymer.

With respect to 100 parts by weight of the polymer, 0.25 parts by weight of a crosslinking agent, xylene diisocyanate (Takenate D110N, Mitsui chemicals), was uniformly mixed, thereby preparing a pressure-sensitive adhesive composition. A weight average molecular weight of the polymer was 140,000.

### Manufacture of conductive laminate

A pressure-sensitive adhesive composition was coated on a PET film on both surfaces of which are hard-coated to have a thickness of approximately 15 µm and dried to form a pressure-sensitive adhesive layer, and an opposite surface of the PET film (thickness: approximately 25 µm) on one surface of which has an ITO layer was adhered to the pressure-sensitive adhesive layer, thereby forming a double-sided conductive laminate.

### Example 2

A conductive laminate was prepared by the same method as described in Example 1, except that 2-ethylhexyl acrylate (2-EHA), methyl acrylate (MA) and 2-hydroxyethylacrylate (2-HEA) were input in a weight ratio of 60:30:10 (2-EHA:MA:2-HEA). The polymer had a weight average molecular weight of 1,600,000.

### Example 3

A conductive laminate was prepared by the same method as described in Example 1, except that 2-ethylhexyl acrylate (2-EHA), methyl acrylate (MA), isobonyl acrylate (IBOA) and 2-hydroxyethylacrylate (2-HEA) were input in a weight ratio of 35:35:20:10, instead of the input of 2-ethylhexyl acrylate (2-EHA), methyl acrylate (MA) and 2-hydroxyethylacrylate (2-HEA) in a weight ratio of 50:40:10. The polymer had a weight average molecular weight of 1,300,000.

### Example 4

A conductive laminate was prepared by the same method as described in Example 1, except that butyl acrylate (BA), methyl acrylate (MA) and acrylic acid (AA) were input in a weight ratio of 72.5:20:7.25, and 0.02 parts by weight of a crosslinking agent was input, instead of the input of 2-ethylhexyl acrylate (2-EHA), methyl acrylate (MA) and 2-hydroxyethylacrylate (2-HEA) in a weight ratio of 50:40:10. The polymer had a weight average molecular weight of 1,840,000.

### Comparative Example 1

A conductive laminate was prepared by the same method as described in Example 1, except that butyl acrylate (BA), methyl acrylate (MA), methoxyethyl acrylate (MEA) and 2-hydroxyethylacrylate (2-HEA) were input in a weight ratio of 35:15:40:10, instead of the input of 2-ethylhexyl acrylate (2-EHA), methyl acrylate (MA) and 2-hydroxyethylacrylate (2-HEA) in a weight ratio of 50:40:10. The polymer had a weight average molecular weight of 1,200,000.

### 1. Measurement of molecular weight

A weight average molecular weight (Mw) was measured under the following conditions using GPC, and Standard polystyrene produced by Agilent System was used to draw a calibration curve, and measurement results were converted.

### <Measurement Conditions>

Measuring Tool: Agilent GPC (Agilent 1200 series, U.S.)
Column: Two connected PL mixed B
Column Temperature: 40 °C
Eluent: Tetrahydrofuran (THF)
Flow Rate: 1.0 mL/min
Concentration: ∼ 1 mg/mL (100 µL injection)

### 2. Confirmation of bubble generation

The conductive laminates manufactured according to the examples or the comparative examples were thermally treated at 150 °C for 1 hour in an oxygen-containing atmosphere, and bubble generation was checked with the naked eye.

**[Table 1]**

| | Example 1 | Example 2 | Example 3 | Example 4 | Comparative Example 1 |
|---|---|---|---|---|---|
| Generation of bubbles after thermal treatment (150 °C, 60 min) | Not generated | Not generated | Not generated | A little generated | Generated in a large amount |

## Claims

1. A conductive laminate, comprising:
a base layer;
a pressure-sensitive adhesive layer formed under the base layer, and comprising a crosslinkable polymer comprising a monomer having a boiling point of 140 °C or less, or 200 °C or more as a polymerization unit; and
a conductive layer formed on the base layer,
wherein the crosslinkable polymer does not comprise a monomer having a boiling point of more than 140 °C and less than 200 °C,
wherein the monomer comprises at least one compound comprising at least one reactive functional group,
wherein the crosslinkable polymer is crosslinked in the pressure-sensitive adhesive layer by at least one multifunctional crosslinking agent selected from the group consisting of an isocyanate crosslinking agent, an epoxy crosslinking agent, an aziridine crosslinking agent and a metal chelate crosslinking agent.

2. The laminate according to claim 1, further comprising:
a second base layer formed under the pressure-sensitive adhesive layer; and
a second conductive layer formed under the second base layer.

3. The laminate according to claim 1, wherein the monomer having a boiling point of 140 °C or less, or 200 °C or more is ethyl (meth)acrylate, n-propyl (meth)acrylate, isopropyl (meth)acrylate, , pentyl (meth)acrylate, 2-ethylhexyl (meth)acrylate, 2-hydroxyethyl (meth)acrylate, 2-hydroxypropyl acrylate, 2-hydroxybutyl acrylate, 4-hydroxybutyl acrylate, n-octyl (meth)acrylate, isooctyl (meth)acrylate, isononyl (meth)acrylate, lauryl (meth)acrylate, tetra decyl (meth)acrylate, methyl (meth)acrylate, t-butyl (meth)acrylate, isobornyl acrylate, cyclohexyl (meth)acrylate, acrylic acid, maleic acid, styrene, vinyl acetate, isopropyl methacrylate, acrylonitrile dihydrodicyclo pentadienyl acrylate, N-vinylformamide, benzyl acrylate, diacetone acrylamide, or a combination thereof.

4. The laminate according to claim 1, wherein the compound comprising a reactive functional group is included at 1 to 20 parts by weight with respect to 100 parts by weight of the crosslinkable polymer.

5. The laminate according to claim 1, wherein the compound comprising at least one reactive functional group is a compound containing a hydroxyl group, a compound containing a carboxyl group, or a compound containing nitrogen.

6. The laminate according to claim 1, wherein the multifunctional crosslinking agent is included at 0.01 to 10 parts by weight with respect to 100 parts by weight of the crosslinkable polymer.

7. The laminate according to claim 1, wherein the crosslinkable polymer has a weight average molecular weight of 500,000 or more.

8. The laminate according to claim 1, wherein the base layer comprises at least one selected from the group consisting of a polyethylene terephthalate film, a polytetrafluoroethylene film, a polyethylene film, a polypropylene film, a polybutene film, a polybutadiene film, a vinyl chloride copolymer film, a polyurethane film, an ethylene-vinyl acetate film, an ethylene-propylene copolymer film, an ethylene-ethyl acrylate copolymer film, an ethylene-methyl acrylate copolymer film and a polyimide film.

9. The laminate according to claim 1, wherein the conductive layer is an indium tin oxide layer.

10. A method of manufacturing a conductive laminate, comprising:
performing thermal treatment on the conductive laminate of claim 1.

11. The method according to claim 10, wherein the thermal treatment is performed at a temperature of 100 to 200 °C.

12. The method according to claim 10, wherein the thermal treatment is performed for 30 minutes to 12 hours.

13. A touch panel, comprising:
the conductive laminate of claim 1.

14. A display device, comprising:
the touch panel of claim 13.

## Patentansprüche

1. Leitfähiges Laminat, welches umfasst:
eine Basisschicht;
eine Haftklebstoffschicht, die unter der Basisschicht gebildet ist und ein vernetzbares Polymer umfasst, das ein Monomer mit einem Siedepunkt von 140°C oder weniger oder 200°C oder mehr als eine Polymerisationseinheit umfasst; und
eine leitfähige Schicht, die auf der Basisschicht gebildet ist,
wobei das vernetzbare Polymer kein Monomer mit einem Siedepunkt von mehr als 140°C und weniger als 200°C umfasst,
wobei das Monomer wenigstens eine Verbindung umfasst, die wenigstens eine funktionelle reaktive Gruppe umfasst,
wobei das vernetzbare Polymer in der Haftklebstoffschicht durch wenigstens ein mehrfunktionelles Vernetzungsmittel vernetzt ist, das ausgewählt ist aus der Gruppe bestehend aus einem Isocyanatvernetzungsmittel, einem Expoxyvernetzungsmittel, einem Aziridinvernetzungsmittel und einem Metallchelatvernetzungsmittel.

2. Laminat nach Anspruch 1, weiter umfassend:
eine zweite Basisschicht, die unter der Haftklebstoffschicht gebildet ist; und
eine zweite leitfähige Schicht, die unter der zweiten Basisschicht gebildet ist.

3. Laminat nach Anspruch 1, wobei das Monomer mit einem Siedepunkt von 140°C oder weniger oder 200°C oder mehr Ethyl(meth)acrylat, n-Propyl(meth)acrylat, Isopropyl(meth)acrylat, Pentyl(meth)acrylat, 2-Ethylhexyl(meth)acrylat, 2-Hydroxyethyl(meth)acrylat, 2-Hydroxypropylacrylat, 2-Hydroxybutylacrylat, 4-Hydroxybutylacrylat, n-Octyl(meth)acrylat, Isooctyl-(meth)acrylat, Isononyl(meth)acrylat, Lauryl(meth)acrylat, Tetradecyl-(meth)acrylat, Methyl(meth)acrylat, t-Butyl(meth)acrylat, Isobornylacrylat, Cyclohexyl(meth)acrylat, Acrylsäure, Maleinsäure, Styrol, Vinylacetat, Isopropylmethacrylat, Acrylnitrildihydrodicyclopentadienylacrylat, N-Vinylformamid, Benzylacrylat, Diacetonacrylamid oder eine Kombination derselben ist.

4. Laminat nach Anspruch 1, wobei die Verbindung, die eine funktionelle reaktive Gruppe umfasst, mit 1 bis 20 Gewichtsteilen in Bezug auf 100 Gewichtsteile des vernetzbaren Polymers eingeschlossen ist.

5. Laminat nach Anspruch 1, wobei die Verbindung, die wenigstens eine funktionelle reaktive Gruppe umfasst, eine Hydroxylgruppe-enthaltende Verbindung, eine Carboxylgruppe-enthaltende Verbindung oder eine Stickstoffenthaltende Verbindung ist.

6. Laminat nach Anspruch 1, wobei das mehrfunktionelle Vernetzungsmittel mit 0,01 bis 10 Gewichtsteilen in Bezug auf 100 Gewichtsteile des vernetzbaren Polymers eingeschlossen ist.

7. Laminat nach Anspruch 1, wobei das vernetzbare Polymer ein Gewichtsmittelmolekulargewicht von 500.000 oder mehr aufweist.

8. Laminat nach Anspruch 1, wobei das Basispolymer wenigstens eines umfasst, das ausgewählt ist aus der Gruppe bestehend aus einem Polyethylenterephthalatfilm, einem Polytetrafluorethylenfilm, einem Polyethylenfilm, einem Polypropylenfilm, einem Polybutenfilm, einem Polybutadienfilm, einem Vinylchloridcopolymerfilm, einem Polyurethanfilm, einem Ethylen-Vinylacetatfilm, einem Ethylen-Propylen-Copolymerfilm, einem Ethylen-Ethylacrylat-Copolymerfilm, einem Ethylen-Methylacrylat-Copolymerfilm und einem Polyimidfilm.

9. Laminat nach Anspruch 1, wobei die leitfähige Schicht eine Indiumzinnoxidschicht ist.

10. Verfahren zum Herstellen eines leitfähigen Laminats, welches umfasst:
Durchführen einer thermischen Behandlung an dem leitfähigen Laminat nach Anspruch 1.

11. Verfahren nach Anspruch 10, wobei die thermische Behandlung bei einer Temperatur von 100 bis 200°C durchgeführt wird.

12. Verfahren nach Anspruch 10, wobei die thermische Behandlung für 30 Minuten bis 12 Stunden durchgeführt wird.

13. Touchpanel, welches umfasst:
das leitfähige Laminat nach Anspruch 1.

14. Displayvorrichtung, welche umfasst:
das Touchpanel nach Anspruch 13.

## Revendications

1. Stratifié conducteur, comprenant :
une couche de base ;
une couche adhésive sensible à la pression formée sous la couche de base, et comprenant un polymère réticulable comprenant un monomère ayant un point d'ébullition de 140 °C ou inférieur, ou de 200 °C ou supérieur en tant qu'unité de polymérisation ; et
une couche conductrice formée sur la couche de base,
dans lequel le polymère réticulable ne comprend pas de monomère ayant un point d'ébullition supérieur à 140 °C et inférieur à 200 °C,
dans lequel le monomère comprend au moins un composé comprenant au moins un groupe fonctionnel réactif,
dans lequel le polymère réticulable est réticulé dans la couche adhésive sensible à la pression par au moins un agent de réticulation multifonctionnel sélectionné dans le groupe constitué d'un agent de réticulation isocyanate, d'un agent de réticulation époxy, d'un agent de réticulation aziridine et d'un agent de réticulation chélatant métallique.

2. Stratifié selon la revendication 1, comprenant en outre:
une deuxième couche de base formée sous la couche adhésive sensible à la pression ; et
une deuxième couche conductrice formée sous la deuxième couche de base.

3. Stratifié selon la revendication 1, dans lequel le monomère ayant un point d'ébullition de 140 °C ou inférieur, ou de 200 °C ou supérieur est le (méth)acrylate d'éthyle, le (méth)acrylate de n-propyle, le (méth)acrylate d'isopropyle, le (méth)acrylate de pentyle, le (méth)acrylate de 2-éthylhexyle, le (méth)acrylate de 2-hydroxyéthyle, l'acrylate de 2-hydroxypropyle, l'acrylate de 2-hydroxybutyle, l'acrylate de 4-hydroxybutyle, le (méth)acrylate de n-octyle, le (méth)acrylate d'isooctyle, le (méth)acrylate d'isononyle, le (méth)acrylate de lauryle, le (méth)acrylate de tétra décyle, le (méth)acrylate de méthyle, le (méth)acrylate de t-butyle, l'acrylate d'isobornyle, le (méth)acrylate de cyclohexyle, l'acide acrylique, l'acide maléique, le styrène, l'acétate de vinyle, le (méth)acrylate d'isopropyle, l'acrylate d'acrylonitrile dihydrodicyclo pentadiényle, l'acrylate de N-vinylformamide benzylique, l'acrylamide de diacétone ou une combinaison de ceux-ci.

4. Stratifié selon la revendication 1, dans lequel le composé comprenant un groupe fonctionnel réactif est incorporé à raison de 1 à 20 parties en poids par rapport à 100 parties en poids du polymère réticulable.

5. Stratifié selon la revendication 1, dans lequel le composé comprenant au moins un groupe fonctionnel réactif est un composé contenant un groupe hydroxyle, un composé contenant un groupe carboxyle ou un composé contenant de l'azote.

6. Stratifié selon la revendication 1, dans lequel l'agent de réticulation multifonctionnel est incorporé à raison de 0,01 à 10 parties en poids par rapport à 100 parties en poids du polymère réticulable.

7. Stratifié selon la revendication 1, dans lequel le polymère réticulable a un poids moléculaire moyen en poids de 500.000 ou supérieur.

8. Stratifié selon la revendication 1, dans lequel la couche de base comprend au moins un composé sélectionné dans le groupe constitué d'un film de téréphtalate de polyéthylène, d'un film de polytétrafluoroéthylène, d'un film de polyéthylène, d'un film de polypropylène, d'un film de polybutène, d'un film de polybutadiène, d'un film de copolymère de chlorure de vinyle, d'un film de polyuréthane, d'un film d'éthylène-acétate de vinyle, d'un film de copolymère d'éthylène-propylène, d'un film de copolymère d'acrylate d'éthylène-éthyle, d'un film de copolymère d'acrylate d'éthylène-méthyle et d'un film de polyimide.

9. Stratifié selon la revendication 1, dans lequel la couche conductrice est une couche d'oxyde d'indium-étain.

10. Procédé de fabrication d'un stratifié conducteur, comprenant l'étape consistant à :
réaliser un traitement thermique sur le stratifié conducteur selon la revendication 1.

11. Procédé selon la revendication 10, dans lequel le traitement thermique est réalisé à une température de 100 à 200 °C.

12. Procédé selon la revendication 10, dans lequel le traitement thermique est réalisé pendant 30 minutes à 12 heures.

13. Écran tactile, comprenant :
le stratifié conducteur selon la revendication 1.

14. Dispositif d'affichage, comprenant :
l'écran tactile selon la revendication 13.
